# EUROPÄISCHE PATENTSCHRIFT

(11) **EP 2 614 969 B1**
(45) Veröffentlichungstag und Bekanntmachung des Hinweises auf die Patenterteilung: **22.10.2014**
(21) Anmeldenummer: 12151236.2
(22) Anmeldetag: 16.01.2012
(51) Int. Cl.: B60G 13/00, B62D 7/18, B60G 15/07

(54) **Schwenklager mit gedrehter Dämpferklemmung**
Steering knuckle with rotated damper clamp
Fusée d'essieu doté d'un serrage d'amortisseur tourné

(43) Veröffentlichungstag der Anmeldung: 17.07.2013
(73) Patentinhaber: Georg Fischer GmbH, 40822 Mettmann (DE)
(72) Erfinder: Rohde, Thomas, 47506 Neukirchen-Vluyn (DE); Hess, Stefan, 8238 Büsingen (CH); Mahnig, Dominik, 8200 Schaffhausen (CH)
(74) Vertreter: Fenner, Seraina

(56) Entgegenhaltungen:
- EP-A1- 0 108 041
- WO-A1-2007/016903
- DE-B4- 10 212 873
- DE-U1- 29 819 912
- US-A1- 2010 207 341

## Beschreibung

Die Erfindung betrifft ein Schwenklager für eine Radaufhängung, insbesondere für eine Vorderachse für ein Kraftfahrzeug, enthaltend eine Aufnahme Radlager, einen Lenkarm, eine Federbeinaufnahme mit einer Dämpferklemmung und eine Tragrippe.

Schwenklager stellen eine Verbindung zwischen dem Dämpfer bzw. Federbein, dem Radlager, der Lenkung und dem Querlenker an der Vorderachse eines Kraftfahrzeugs her.

Die DE 102 12 873 B4 offenbart ein Schwenklager, bei welchem das Federbein mit seinem freien unteren Ende in einen am Schwenklager vorgesehenen Klemmring eingeschoben ist, welcher mittels Schrauben-Mutter-Verbindung festgezogen wird, dass das Schwenklager sicher am unteren Ende des Federbeins gehalten ist. Nachteilig an einem solchen Schwenklager ist die massive Bauform, welche durch die massige Klemmung, die gegen die Fahrzeuginnenseite gerichtet ist, ein hohes Gewicht aufweist, was bei heutigen Fahrzeugen unerwünscht ist da eine Treibstoffreduzierung angestrebt wird.

Die DE 10 2005 040 101 A1 offenbart ein Schwenklager, bei welchem die Klemmung durch die beiden Klemmringe, welche übereinander angeordnet sind gebildet sind. Diese ist weniger massiv jedoch ist eine genaue Herstellung des Konus in den Klemmringen um eine optimale Aufnahme des Federbeins zu gewährleisten sehr aufwendig in der Herstellung.

Die CH 659 442 offenbart ein Schwenklager, welches die Dämpferklemmung in Richtung Fahrzeugaussenseite angeordnet hat. Jedoch ist die Schraube derart angeordnet, dass sie das Federbeinrohres segmentförmig schneidet, was den Nachteil einer zusätzlichen Umformung des Federbeins mit sich bringt.

Es ist Aufgabe der Erfindung ein Schwenklager und ein damit verbundenes Verfahren vorzuschlagen, welches eine optimale Dämpferklemmung ermöglicht und den auftretenden Belastungen stand hält. Durch die bionische Formgestaltung wird ebenso eine Gewichtseinsparung angestrebt. Des Weiteren besteht die Aufgabe darin ein Schwenklager durch ein Verfahren herzustellen, welches möglicht wenige zusätzliche Arbeitsschritte benötigt bis das Schwenklager einbaufertig ist.

Diese Aufgabe wird erfindungsgemäss dadurch gelöst, dass die Dämpferklemmung der Federbeinaufnahme der Fahrzeugaussenseite zugewandt ist und dass das Schwenklager eine Öffnung im Bereich zwischen Aufnahme Radlager und der Dämpferklemmung aufweist, welche der Relativbewegung der beiden Klemmseiten der Dämpferklemmung zueinander dient sowie dass der Schlitz der Dämpferklemmung durch das Ausdrehen der Federbeinaufnahme durchgehend geöffnet wird.

Dadurch dass die Dämpferklemmung der Federbeinaufnahme auf der Fahrzeugaussenseite angeordnet ist, kann die Tragrippe für die Dämpferklemmung miteinbezogen werden, wodurch zusätzliche Butzen resp. Materialverdickungen bzw. Materialanhäufungen für die Anordnung von Schrauben, für eine Dämpferklemmung vermieden werden können. Das ermöglicht ein leichteres Schwenklagers, welches durch seine optimierte Bauform aber trotzdem den Festigkeitsansprüchen entspricht. Die Tragrippe, welche der Stabilität dient, verläuft rechtwinklig zum Spannelement, dadurch kann die Tragrippe als Auflagefläche des Spannelements genutzt werden. Damit der Federbeinaufnahme mit der Dämpferklemmung das Zusammenspannen ermöglicht wird, ist eine Öffnung im Schwenklager vorgesehen, welche sich im Bereich zwischen Aufnahme Radlager und Dämpferklemmung befindet. Die Öffnung dient der Relativbewegung der beiden Klemmseiten der Dämpferklemmung zueinander. Die Öffnung ist derart gross ausgebildet, dass das Schwenklager den Anforderungen der Belastbarkeit genügt aber dennoch möglichst viel Material bzw. Gewicht eingespart werden kann. Die optimale Kontur der Öffnung verhindert bei einer Bauteilbelastung, wie bei auftretenden Bremsmomenten, induzierte Spannungsspitzen, welche zu einem frühzeitigen Ermüdungsbruch führen würden. Wie schon zuvor erwähnt wird die Auflagefläche des Spannelements durch eine Tragrippe gebildet. So wird die Tragrippe, welche als Grundfunktion der Versteifung des Schwenklagers dient, zusätzlich genutzt und es kann dadurch Material für zusätzliche Butzen der Dämpferklemmung eingespart werden. Zudem ermöglicht eine solche Bauform auf der gegenüberliegenden Seite der Dämpferklemmung bzw. auf der Fahrzeuginnenseite des Schwenklagers weiteres Material einzusparen indem an der Stelle einer durchgehenden Hülse für die Federbeinaufnahme nur noch Stege vorgesehen sind, vorzugsweise weist die Federbeinaufnahme zwei Stege auf. Die Stege sind durch eine Aussparung von einander beanstandet, vorteilhaft weist die Aussparung eine ovale oder langlochförmige Form auf. Ein weiterer vorteilhafter Effekt der Stege besteht darin, dass die Materialanhäufung reduziert wird bzw. durch den Wegfall der Butzen vermieden werden kann und so die giesstechnischen Eigenschaften deutlich verbessert werden. Das Schwenklager wird durch Giessen hergestellt, vorzugsweise wird Sphäroguss oder Aluminium verwendet. Die verwendeten möglichen Giessverfahren für die Herstellung des Schwenklagers sind Sand-, Kokillen- oder Druckguss.
Zur weitern Stabilisierung der Federbeinaufnahme am Schwenklager dient eine Tragstruktur. Durch die zwei am Umfang der Federbeinaufnahme angeordneten Anbindungspunkte der Tragstruktur, welche vorzugsweise übereinander in Richtung Mittelachse der Federbeinaufnahme liegen, wird eine höhere Belastbarkeit des Schwenklagers ohne viel zusätzliches Gewicht erzielt. Durch diese unter bionischen Gesichtspunkten filigran konstruierte Tragstruktur wird die Dämpferklemmung zusätzlich verstärkt bzw. durch die Form der Tragstruktur wird eine hohe Verformung unter Bremsmomenten bzw. hohen Belastungen vermieden.

Beim Giessen des Schwenklagers wird die Federbeinaufnahme so vergossen, dass der Innendurchmesser nach dem Giessen auf das benötigte Mass für die Aufnahme des Federbeins ausgedreht werden muss und wodurch gleichzeitig auch der durchgehende Schlitz entsteht. Vor der Nacharbeit durch Ausdrehen sind die beiden Klemmseiten der Dämpferklemmung noch miteinander am Innendurchmesser verbunden und der Schlitz ist noch nicht durchgehend, sonder ist nach dem Giessvorgang vorerst eine Nut, welche vom Aussendurchmesser der Federbeinaufnahme bis an das abzudrehende Gussmaterial, welches den Nutgrund bildet, tief ist. Durch das Ausdrehen wird das Material am Innendurchmesser soweit abgedreht bis an der Stelle der Nut bzw. des zukünftigen Schlitzes kein Material mehr vorhanden ist und der Schlitz durchgehend offen ist, wodurch die Dämpferklemmung einsatzfähig ist.

Ein Ausführungsbeispiel der Erfindung wird anhand der Figuren beschrieben, wobei sich die Erfindung nicht nur auf das Ausführungsbeispiel beschränkt. Es zeigen:
Fig. 1 eine perspektivische Darstellung eines erfindungsgemässen Schwenklagers,
Fig. 2 eine perspektivische Darstellung eines erfindungsgemässen Schwenklagers,
Fig. 3 eine Seitenansicht eines erfindungsgemässen Schwenklagers mit eingebautem Spannelement,
Fig. 4 eine Seitenansicht eines erfindungsgemässen Schwenklagers,
Fig. 5 eine Draufsicht eines erfindungsgemässen Schwenklagers mit eingebautem Spannelement und
Fig. 6 eine Draufsicht eines erfindungsgemässen Schwenklagers vor der Nachbearbeitung durch Ausdrehen.

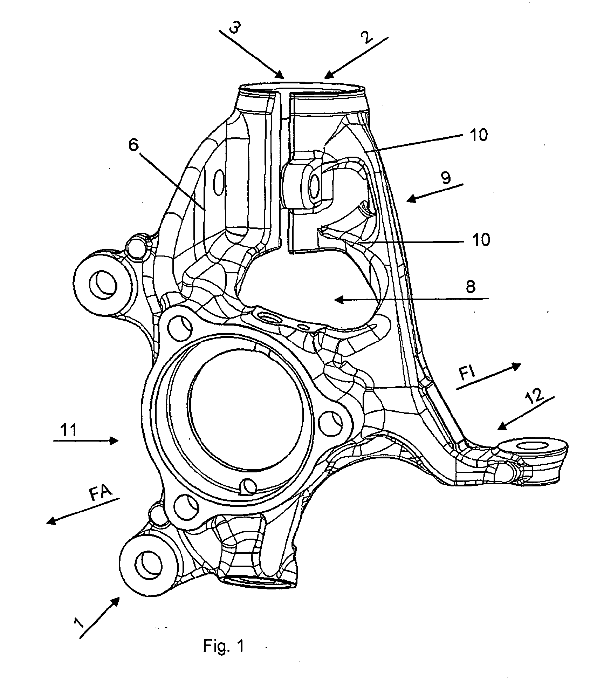

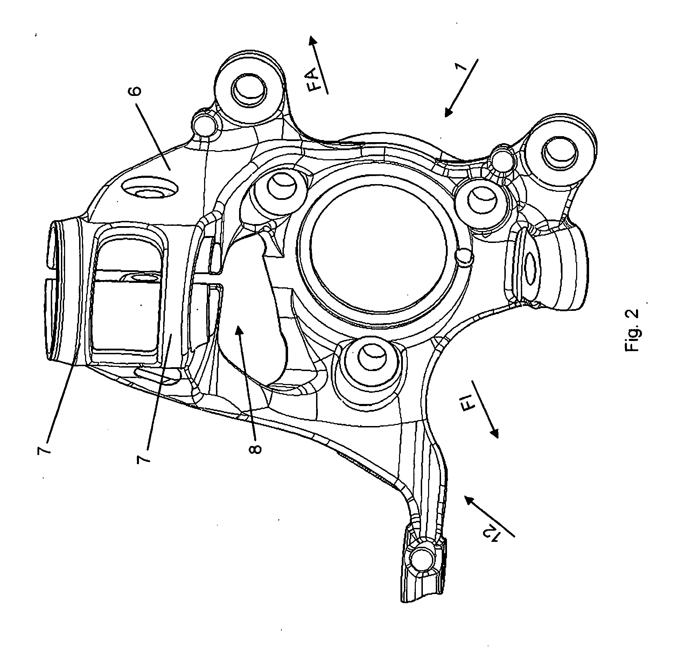

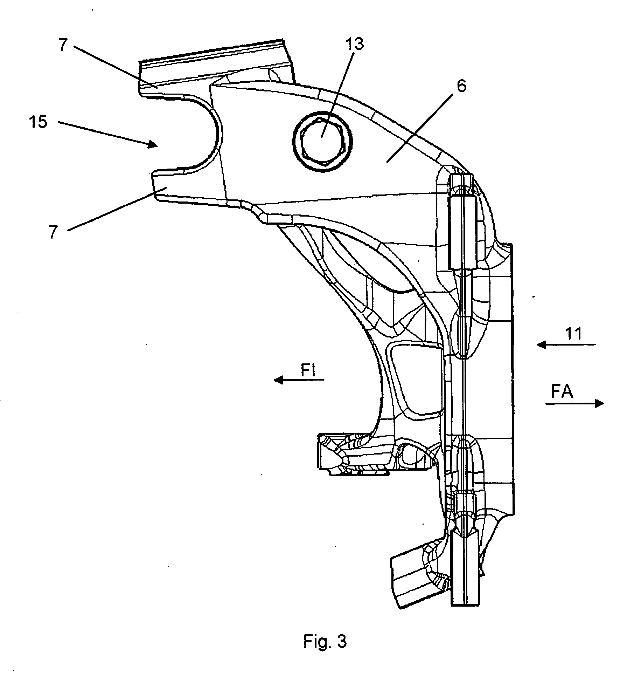

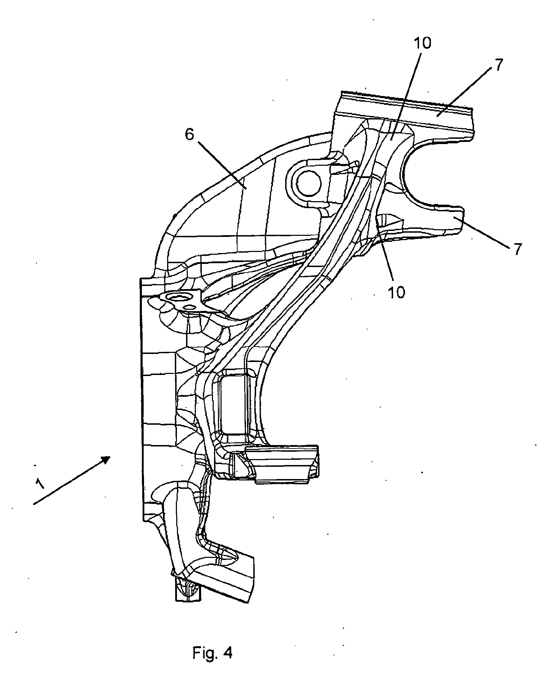

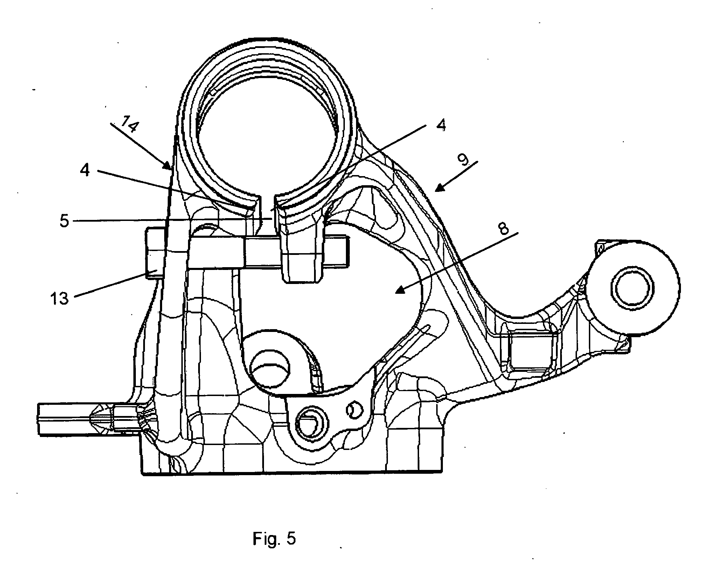

In Fig. 1 ist das erfindungsgemässe Schwenklager 1 dargestellt. Die Aufnahme Radlager 11 dient dem Einbau eines Radlagers (nicht dargestellt). Die in den Figuren eingetragenen Pfeilrichtungen FA und FI weisen jeweils auf die Fahrzeugaussenseite FA und die Fahrzeuginnenseite FI im Fahrzeug eingebautem Zustand des Schwenklagers 1 hin. Die am Schwenklager 1 angeordnete Federbeinaufnahme 2 dient der Befestigung des Federbeins resp. Stossdämpfers (nicht dargestellt). Die Dämpferklemmung 3 ist beim erfindungsgemässen Schwenklager 1 an der Federbeinaufnahme 2 in Richtung Fahrzeugaussenseite FA angeordnet. Bei herkömmlichen Schwenklagern befindet sich die Klemmung in der Regel auf der Fahrzeuginnenseite des Schwenklagers. Um das Schwenklager 1 möglichst leicht zu gestallten, ist auf unnötiges Material verzichtet und dafür bestehende Strukturen in ihrer Funktion mehrfach genutzt worden. So dient die Tragrippe 6 auch als Auflagefläche 14 für das Spannelement 13. Womit einerseits zusätzliche Butzen zur Befestigung des Spannelements an der Federbeinaufnahme in Richtung Fahrzeuginnenseite FI, wie aus dem Stand der Technik bekannt, vermieden werden können und andererseits vorhandene Tragrippen 6, welche zur Stabilisierung und Versteifung des Schwenklagers 1 bzw. der Federbeinaufnahme 2 dienen, für eine weitere Funktion genutzt werden. Die Tragrippe 6 bzw. die Aufnahmefläche 14 verläuft vorzugsweise tangential zum Aussendurchmesser der Federbeinaufnahme 2.
Die Tragrippe 6 ist rechtwinklig zum Spannelement 13 angeordnet, was eine gleichmässige Kraftverteilung auf die Federbeinklemmung bewirkt. Als Spannelement 13 ist vorzugsweise eine Schraube einzusetzen, wie aus Fig. 3 und 5 ersichtlich ist, jedoch sind auch andere Spannelemente denkbar. Die Dämpferklemmung 3 des erfindungsgemässen Schwenklagers 1 weist einen Schlitz 5, auf der die Festklemmung des Federbeins im Schwenklager 1 ermöglicht. Durch das Festziehen mit Hilfe des Spannelements 13 bewegen sich die Klemmseiten 4 aufeinander zu wodurch der Innendurchmesser der Federbeinaufnahme 2 verjüngt und dadurch das Federbein festgeklemmt wird. Die Öffnung 8, welche im Bereich zwischen der Aufnahme Radlager 11 und der Dämpferklemmung 3 angeordnet ist, dient der Relativbewegung der beiden Klemmseiten 4. Das heisst, dass die Öffnung 8 ein zusammenklemmen ermöglicht, wodurch die beiden Klemmseiten 4 aufeinander zu bewegbar sind. Die Öffnung 8 ist vorzugsweise möglichst gross ausgebildet um am Schwenklager 1 unnötiges Gewicht zu vermeiden, aber trotzdem nur so gross dass das Schwenklager 1 den erforderlichen Belastungen stand hält. Die Form bzw. der Konturverlauf der Öffnung 8 ist so ausgelegt, dass im Bremsfall bzw. im Belastungsfall keine induzierten Spannungsspitzen im Schwenklager 1 entstehen, welche das Schwenklager 1 überbeanspruchen. In Fig. 5 ist der optimierte Verlauf der Öffnung 8 sowie die Federbeinaufnahme 2 ersichtlich.
Um eine hohe Verformung im Belastungsfall bspw. unter Bremsmomenten des Schwenklagers 1 bzw. der Federbeinaufnahme 2 zu vermeiden, ist als Verstärkung eine Tragstruktur 9 an der Federbeinaufnahme 2 vorgesehen, welche am Aussendurchmesser der Federbeinaufnahme 2 durch zwei Anbindungspunkte 10 der Tragstruktur angeordnet ist. Die Anbindungspunkte 10 der Tragstruktur liegen vorzugsweise in Richtung Mittelachsenverlauf der Federbeinaufnahme 2 übereinander. Die Tragstruktur 9 läuft ausgehend von den beiden Anbindungspunkten 10 der Tragstruktur in Richtung Lenkarm 12 zusammen. Durch diese Form bzw. diese Struktur der Tragstruktur 9 wird das Gewicht des Schwenklagers 1 im Vergleich zu Schwenklagern die aus dem Stand der Technik bekannt sind , die ebenfalls eine Verstärkung zur Vermeidung einer hohen Verformung aufweisen, stark reduziert, da der filigrane Aufbau der Tragstruktur 9 des erfindungsgemässen Schwenklagers 1 Gewichtsersparnis mit sich bringt.
Die Federbeinaufnahme 2 weist auf der gegenüberliegenden Seite der Dämpferklemmung 3 bzw. in Richtung Fahrzeuginnenseite FI zwei in Umfangsrichtung der Mittelachse des Federbeins durchgehende Stege 7 auf, die das Federbein des Stossdämpfers (nicht dargestellt) umfassen. Vorzugsweise ist die Aussparung 15 zwischen den Stegen 7 oval oder langlochförmig ausgebildet. Durch die Aussparung 15 bzw. durch die zwei Stege 7 wird wiederum das Gewicht des Schwenklagers 1 reduziert. In Fig. 2 sind die Stege 7, welche vorzugsweise am oberen und unteren Rand der Federbeinaufnahme angeordnet sind erkennbar. Auch eine andere Anzahl von Stegen 7 ist denkbar. Die Form der dazwischen liegenden Aussparung 15 ist so optimiert, dass auch dort im Belastungsfall keine induzierten Spannungsspitzen auftreten.
Fig. 3 zeigt die Seitenansicht des erfindungsgemässen Schwenklagers 1, bei welchem ein Spannelement 13 eingsetzt ist. Vorzugsweise wird dazu eine Schraube verwendet. Der Kopf des Spannelements 13 liegt auf der Auflagefläche 14 der Tragrippe 6 auf. Somit dient die Tragrippe 6 der Dämpferklemmung 3, wie auch zur Stabilisation bzw. der Festigkeit des Schwenklagers 1 bzw. der Federbeinaufnahme 2.
Der Verlauf der Tragstruktur 9 sowie die Anordnung der Anbindungspunkte 10 der Tragstruktur sind in Fig. 4 nochmals erkennbar.

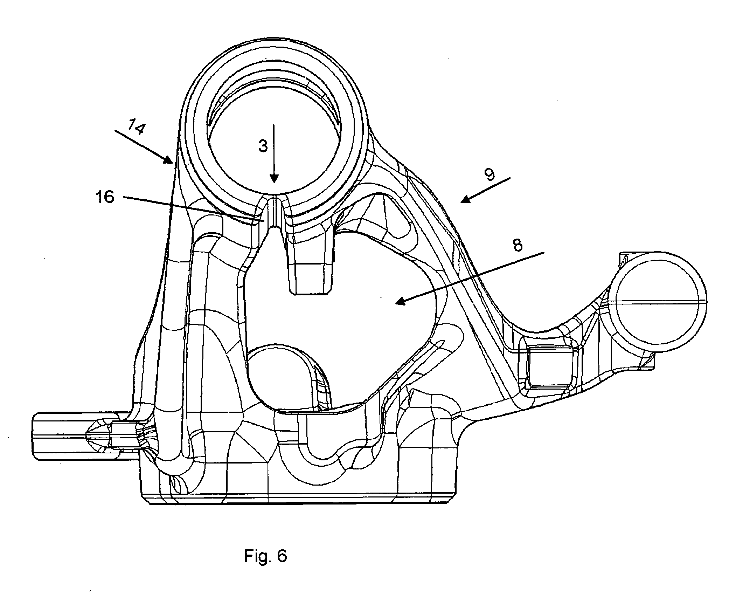

Fig. 6 zeigt das Schwenklager 1 vor der Nachbearbeitung der Federbeinaufnahme 2 durch Ausdrehen des Inndurchmessers. Durch das Ausdrehen des Innendurchmessers vergrössert sich dieser, wodurch sich die Wandstärke verringert. Im Bereich der Nut 16 fällt die Wandung der Federbeinaufnahme 2 ganz weg, wodurch aus der Nut 16 ein durchgehender Schlitz 5 entsteht und dadurch das Zusammenspannen der Klemmseiten 4 ermöglicht wird.

### Bezugszeichenliste

- 1: Schwenklager
- 2: Federbeinaufnahme
- 3: Dämpferklemmung
- 4: Klemmseite
- 5: Schlitz
- 6: Tragrippe
- 7: Steg
- 8: Öffnung
- 9: Tragstruktur
- 10: Anbindungspunkt
- 11: Aufnahme Radlager
- 12: Lenkarm
- 13: Spannelement
- 14: Auflagefläche
- 15: Aussparung
- 16: Nut
- FA: Fahrzeugaussenseite
- FI: Fahrzeuginnenseite

## Patentansprüche

1. Schwenklager (1) für eine Radaufhängung, insbesondere für eine Vorderachse eines Kraftfahrzeugs, enthaltend eine Aufnahme Radlager (11), einen Lenkarm (12), eine Federbeinaufnahme (2) mit einer Dämpferklemmung (3) und eine Tragrippe (6), **dadurch gekennzeichnet, dass** die Dämpferklemmung (3) der Federbeinaufnahme (2) der Fahrzeugaussenseite (FA) zugewandt ist und dass das Schwenklager (1) eine Öffnung (8) im Bereich zwischen Aufnahme Radlager (11) und der Dämpferklemmung (3) aufweist.

2. Schwenklager (1) nach Anspruch 1, **dadurch gekennzeichnet, dass** die Tragrippe (6) die Auflagefläche (14) für das Spannelements (13) der Dämpferklemmung (3) bildet.

3. Schwenklager (1) nach einem der Ansprüche 1 oder 2, **dadurch gekennzeichnet, dass** die der Fahrzeuginnenseite (FI) zugewandten Seite der Federbeinaufnahme (2) mindestens einen Steg (7) aufweist, vorzugsweise weist die Federbeinaufnahme (2) zwei Stege (7) auf.

4. Schwenklager nach Anspruch 3, **dadurch gekennzeichnet, dass** der Steg (7) in Umfangsrichtung der Mittelachse des Federbeins verläuft.

5. Schwenklager (1) nach Anspruch 3 oder 4, **dadurch gekennzeichnet, dass** die Stege (7) jeweils am oberen und unteren Ende der Federbeinaufnahme (2) angeordnet sind.

6. Schwenklager (1) nach einem der Ansprüche 1 bis 5, **dadurch gekennzeichnet, dass** das Schwenklager (1) ein Gussteil ist, vorzugsweise aus Sphäroguss oder Aluminium.

7. Schwenklager nach einem der Ansprüche 1 bis 6, **dadurch gekennzeichnet, dass** das Schwenklager (1) eine Tragstruktur (9) aufweist, welche am Aussendurchmesser der Federbeinaufnahme (2) durch zwei Anbindungspunkte (10) der Tragstruktur angeordnet ist.

8. Schwenklager nach Anspruch 7, **dadurch gekennzeichnet, dass** die zwei Anbindungspunkte (10) der Tragstruktur (9) übereinander in Richtung Mittelachse der Federbeinaufnahme (2) angeordnet sind.

9. Verfahren zur Herstellung eines Schwenklagers (1) nach Anspruch 1, **dadurch gekennzeichnet, dass** der Schlitz (5) der Dämpferklemmung (3) durch das Ausdrehen der Federbeinaufnahme (2) durchgehend geöffnet wird.

## Claims

1. Pivot bearing (1) for a wheel suspension, in particular for a front axle of a motor vehicle, containing a wheel bearing receiver (11), a steering arm (12), a spring strut receiver (2) with a damper clamping (3) and a carrier rib (6), **characterised in that** the damper clamping (3) of the spring strut receiver (2) faces the vesicle outside (FA) and that the pivot bearing (1) has an opening (8) in the region between the wheel bearing receiver (11) and the damper clamping (3).

2. Pivot bearing (1) according to Claim 1, **characterised in that** the carrier rib (6) forms the support surface (14) for the clamping element (13) of the damper clamping (3).

3. Pivot bearing (1) according to one of Claims 1 or 2, **characterised in that** the side of the spring strut receiver (2) facing the vehicle inside (FI) has at least one web (7), preferably the spring strut receiver (2) has two webs (7).

4. Pivot bearing according to Claim 3, **characterised in that** the web (7) runs in the peripheral direction of the centre axis of the spring strut.

5. Pivot bearing (1) according to Claim 3 or 4, **characterised in that** the webs (7) are arranged on the upper and lower ends respectively of the spring strut receiver (2).

6. Pivot bearing (1) according to any of Claims 1 to 5, **characterised in that** the pivot bearing (1) is a casting, preferably made of ductile cast iron or aluminium.

7. Pivot bearing according to any of Claims 1 to 6, **characterised in that** the pivot bearing (1) has a carrier structure (9) which is arranged on the outer diameter of the spring strut receiver (2) through two connecting points (10) of the carrier structure.

8. Pivot bearing according to Claim 7, **characterised in that** the two connecting points (10) of the carrier structure (9) are arranged above each other in the direction of the centre axis of the spring strut receiver (2).

9. Method for production of a pivot bearing (1) according to Claim 1, **characterised in that** the slot (5) of the damper clamping (3) is opened uninterruptedly by turning out the spring strut receiver (2).

## Revendications

1. Palier pivotant (1) pour une suspension de roue, en particulier pour un essieu avant d'un véhicule automobile, comprenant un logement de palier de roue (11), un bras de direction (12), un logement de jambe de suspension (2) avec un serrage d'amortisseur (3) et une ailette porteuse (6), **caractérisé en ce que** le serrage d'amortisseur (3) du logement de jambe de suspension (2) est tourné vers le côté extérieur du véhicule (FA) et **en ce que** le palier pivotant (1) présente une ouverture (8) dans la région comprise entre le logement de palier de roue (11) et le serrage d'amortisseur (3).

2. Palier pivotant (1) selon la revendication 1, **caractérisé en ce que** l'ailette porteuse (6) forme la surface d'appui (14) pour l'élément de serrage (13) du serrage d'amortisseur (3).

3. Palier pivotant (1) selon l'une quelconque des revendications 1 ou 2, **caractérisé en ce que** le côté du logement de jambe de suspension (2) tourné vers le côté intérieur du véhicule (FI) présente au moins une nervure (7), de préférence le logement de jambe de suspension (2) présente deux nervures (7).

4. Palier pivotant selon la revendication 3, **caractérisé en ce que** la nervure (7) s'étend dans la direction périphérique de l'axe médian de la jambe de suspension.

5. Palier pivotant (1) selon la revendication 3 ou 4, **caractérisé en ce que** les nervures (7) sont disposées à chaque fois au niveau de l'extrémité supérieure et inférieure du logement de jambe de suspension (2).

6. Palier pivotant (1) selon l'une quelconque des revendications 1 à 5, **caractérisé en ce que** le palier pivotant (1) est une pièce coulée, de préférence en fonte à graphite sphéroïdal ou en aluminium.

7. Palier pivotant selon l'une quelconque des revendications 1 à 6, **caractérisé en ce que** le palier pivotant (1) présente une structure porteuse (9) qui est disposée au niveau du diamètre extérieur du logement de jambe de suspension (2) au moyen de deux points de liaison (10) de la structure porteuse.

8. Palier pivotant selon la revendication 7, **caractérisé en ce que** les deux points de liaison (10) de la structure porteuse (9) sont disposés l'un au-dessus de l'autre dans la direction de l'axe médian du logement de jambe de suspension (2).

9. Procédé de fabrication d'un palier pivotant (1) selon la revendication 1, **caractérisé en ce que** la fente (5) du serrage d'amortisseur (3) est ouverte en continu par dévissage du logement de jambe de suspension (2).
